# EUROPEAN PATENT APPLICATION

(11) **EP 2 854 082 A2**
(43) Date of publication of application: **01.04.2015**
(21) Application number: 14181180.2
(22) Date of filing: 15.08.2014
(51) Int. Cl.: G06Q 10/06, H04W 64/00

(54) **Objective metrics measuring value of employees**

(30) Priority: 30.09.2013 US 201314041582
(71) Applicant: NCR Corporation, Duluth, GA 30096 (US)
(72) Inventor: Gibson, Ray, Lewisville, TX 75056 (US); Finley, Michael, Roswell, GA 30076 (US)
(74) Representative: MacLeod, Roderick William

(57) **Abstract**

Objective metrics measuring value of employees are provided. Enterprise metrics are gathered for when specific employees are present and an enterprise. Correlations between performance values of the enterprise based at least in part on the enterprise metrics are made.

## Description

In many industries, such as the hospitality industry, there is a belief that key employees, such as executives, can influence performance of an enterprise facility when those key employees are physically present at the facility.

As a result, many industries require key employees to visit and spend a designated amount of time at each or predefined facilities.

In most instances, industries do not have metrics that validate their assumptions about the presences of key employees at facilities impacting the performance of those facilities. In other words, there is a gut feel that the key employees are needed at the facilities but there is no real objective measure to show that the gut feel is a correct assumption.

Also, some facilities may be hard to visit or get to and these facilities are often believed to suffer when key employees do not visit them in a calendar year.

Moreover, if may not just be that key management employees influence performance but there may very well be employees at a facility or even groups of select employees at a facility that can influence that facilities performance. Presently, there is no mechanism that tracks or tries to record whether these employees or groups of employees can in fact favorably or negatively impact enterprise performance at a given enterprise facility.

Additionally, no real team is simply the sum of its parts. Different people play different roles or represent different positions, whether in the workplace or in sports (or even video games), and complement each other in unique and distinct ways. The problem of credit assignment refers to the ability to assign credit for overall team success to anyone member. Solving this problem aims to assist in providing incentives and compensation for individuals as well as making choices for appropriate individuals to add or replace on a given team.

Businesses operate with specific goals, like profitability or top-line sales, much like a sport's team operates with a goal of a winning record or specific scores in a match. Great managers and great coaches understand the dimensions of strength and weakness in each of their workers/players, creating winning combinations or individuals whose performance minimizes costs while maximizing potential is an art and not a science at present.

In fact, most managers lack the perspective of deep knowledge of their workers' skills because of the demands of business operations. For modern businesses, the manager is as a much of the team as he or she is a coach making choices.

In various embodiments, objective metrics measuring value of employees are presented.

According to a first aspect of the present invention there is provided a processor-implemented method programmed in memory or a non-transitory processor-readable medium and to execute on one or more processors of a device configured to execute the method, comprising: tracking, via the device, a date and time that an employee is physically present at an enterprise; monitoring, via the device, one or more enterprise metrics for the date and time at the enterprise; and correlating, via the device, one or more performance values for the one or more enterprise metrics with the employee physically present.

The method optionally further comprises: obtaining, via the device, other performance values associated with other enterprise metrics and for other dates and times for the employee and for other employees.

The method optionally further comprises: training, via the device, a Bayesian Network based at least in part on the one or more performance values, the one or more enterprise metrics, other performance values for the other enterprise metrics, the employee, and the other employees.

The method optionally further comprises: generating, via the device, from the Bayesian Network one or more outcome weights for each employee with respect to other employees, the enterprise metrics, and the other enterprise metrics.

The method optionally further comprises: generating, via the device, an overall contribution score for a particular employee based at least in part on summing the particular employee's one or more outcome weights.

The method optionally further comprises: predicting, via the device, from the Bayesian Network outcomes for different proposed combinations of the employees based at least in part on a future time and date at the enterprise.

The method optionally further comprises: proposing, via the device, an optimal grouping of the employees with one another for the future date and time.

Tracking optionally further includes using a geographical position communicated from an application on a mobile device of the employee to track the date and time the employee is physically present at the enterprise.

Tracking optionally further includes using an enterprise check-in technology to determine when the employee is physically present at the enterprise for the date and time.

Monitoring optionally further includes acquiring a transactional metric for a transaction occurring at the enterprise on the date and time as the enterprise metric.

Correlating optionally further includes assigning an objective contribution value to the employee based on a calculation of the one or more enterprise metrics for the date and time.

According to a second aspect of the present invention there is provided a system comprising: a server having a numerical analysis module; wherein the numerical analysis is configured to be trained based at least in part on gathered one or more enterprise metrics, one or more enterprise performance ratings for the one or more enterprise metrics, and one or more employee identifiers for one or more employees physically present during one or more transactions tied to the one or more enterprise metrics, and wherein the numerical analysis module is further configured to generate outcome one or more contribution ratings for each employee.

The numerical analysis module may be a Bayesian Network.

The server may be a cloud server.

According to a third aspect of the present invention there is provided a processor-implemented method programmed in memory or a non-transitory processor-readable medium and to execute on one or more processors of a device configured to execute the method, comprising: obtaining, at the device, one or more transaction details for one or more transactions occurring at an enterprise; receiving, at the device, one or more employee identifiers for one or more employees present during each transaction at the enterprise; packaging, at the device, the one or more transaction details and the one or more employee identifiers with one or more enterprise performance ratings for each of the transactions to form one or more packaged metrics; and transmitting, from the device, the one or more packaged metrics to an evaluation service to obtain one or more objective contribution ratings for each employee.

The method optionally further comprises: periodically updating the evaluation service with additional packaged metrics for other transactions to get updated objective contribution ratings.

Obtaining optionally further includes acquiring the transaction details from one or more Point-Of-Sale (POS) devices present at the enterprise.

Receiving optionally further includes obtaining some of the employee identifiers from geographic coordinates associated with mobile devices of some employees or from check-in technology present at the enterprise.

Packaging optionally further includes obtaining the one or more enterprise performance values from evaluation of one or more enterprise rules or one or more policies that map one or more values for the one or more transaction details to the one or more enterprise performance ratings.

Transmitting optionally further includes formatting the one or more packaged metrics for the evaluation service, the evaluation service is a Bayesian Network or a Neural Network.

According to an embodiment, a method for objectively measuring a value for an employee is provided. Specifically, in an embodiment, a date and time that an employee is physically present at an enterprise is tracked. Next, one or more enterprise metrics are measured for the date and time at the enterprise. Finally, one or more performance values for the one or more enterprise metrics are correlated with the employee being physically present at the enterprise.

These and other aspects of the present invention will become apparent from the following specific description, given by way of example, with reference to the accompanying drawings, in which:
FIG. 1 is a diagram of a method for objectively measuring a value for an employee, according to an example embodiment;
FIG. 2 is a diagram of another method for objectively measuring a value for an employee, according to an example embodiment; and
FIG. 3 is a diagram of an employee contribution system, according to an example embodiment.

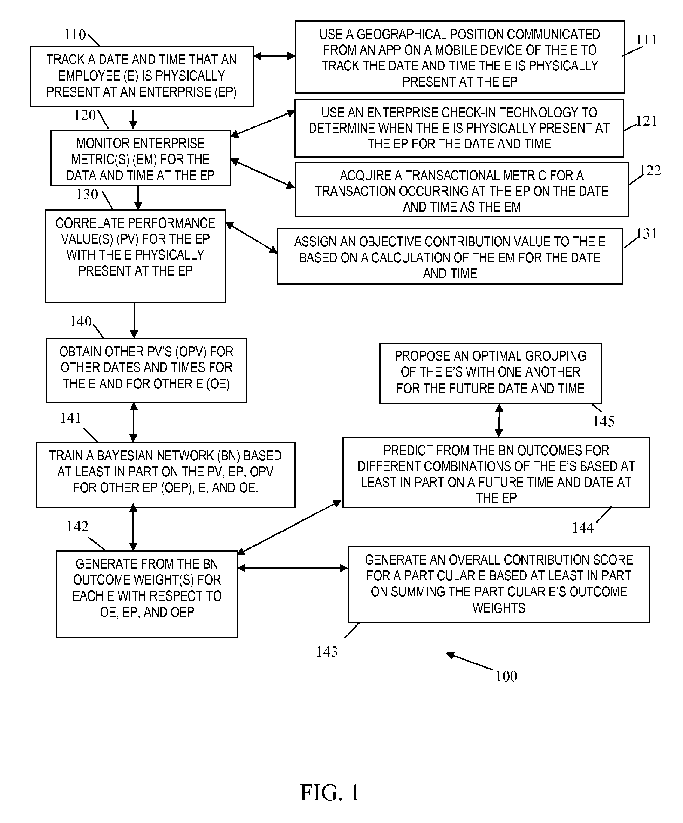

FIG. 1 is a diagram of a method 100 for objectively measuring a value for an employee, according to an example embodiment. The method 100 (hereinafter "employee evaluator service") is implemented as instructions programmed and residing within memory and/or a non-transitory computer-readable (processor-readable) storage medium and executed by one or more processors of a device. The processors are specifically configured and programmed to process the employee evaluator service. The employee evaluator service is operational over a network. The network is wired, wireless, or a combination of wired and wireless.

At 110, the employee evaluator service tracks a date and time that an employee is physically present at an enterprise facility. That is, the specific date and time that an employee is present at a facility is noted by the employee evaluator service.

According to an embodiment, at 111, the employee evaluator service uses a geographical position communicated from an application on a mobile device of an employee to track the date and time the employee is physically present at the enterprise or facility of the enterprise. So, suppose a mobile device includes an app that communicates in near-real time the geographical position of the employee and that position indicates that the employee is present at the facility.

In another case, at 112, the employee evaluator service uses an enterprise check-in technology to determine when the employee is physically present at the enterprise for the date and time. The check-in technology can include a scanner that detects radio frequency and the like and detects when the employee is checked in based on a smart tag or badge. In some instances, biometrics utilizing a variety of checks can occur, including facial recognition, retinal scan, etc. Moreover, the employee can have any type of detectable radio source on his /her person that is detected.

At 120, the employee evaluator service monitors one or more enterprise metrics for the date and time at the enterprise. So, the employee being present at the facility for a given date and time is all recorded and noted by the employee evaluator service.

According to an embodiment at 121, the employee evaluator service acquires a transactional metric for a transaction occurring at the enterprise on the date and time as the enterprise metric. So, transaction information occurring when the employee is present at the facility of the enterprise is recorded and noted.

At 130, the employee evaluator service correlates one or more performance values for the one or more enterprise metrics with the employee being physically present at the facility of the enterprise.

So, the enterprise metrics may be evaluated in view of policy and threshold to map to predefined performance values, such that specific transaction metrics or enterprise metrics are considered to be better than other metrics based on threshold values that define the performance values.

According to an embodiment, at 131, the employee evaluator service assigns an objective contribution value to the employee based on a calculation of the one or more enterprise metrics for the date and time. So, when the performance values for the metrics are considered good based on a threshold and scale, the employee receives a good contribution value also based on a sliding scale.

In an embodiment, at 140, the employee evaluator service obtains other performance values associated with other enterprise metrics and for other dates and times for the employee and other employees.

Continuing with the embodiment of 140 and at 141, the employee evaluator service trains a Bayesian Network based at least in part on one or more performance values, the one or more enterprise metrics, other performance values for the enterprise metrics, the employee, and the other employees.

Continuing with the embodiment of 141 and at 142, the employee evaluator service generates from the Bayesian Network one or more outcome weights for each employee with respect to other employees, the enterprise metrics, and the other enterprise metrics. So, if the performance values are better for a given employee then the outcome values are better relative to other employees and their performance values.

Continuing with the embodiment of 142 and at 143, the employee evaluator service generates an overall contribution score for a particular employee based at least in part on summing the particular employees one or more outcome weights.

Continuing with the embodiment of 142 and at 144, the employee evaluator service predicts from the Bayesian Network outcomes for different combinations of the employees based at least in part on a future date and time at the enterprise. So, predication and forecasting can be used via the Bayesian Network. In fact, any credit assignment technique can be used and in a Bayesian Network is not required in each instance. Basically, credit is attributed to the presence of an employee based on outcome with some predefined specified conditions. So, a Key Employee gets credit for positive results based on that Key Employee being present at a facility when the positive results are noted.

Continuing with the embodiment of 144 and at 145, the employee evaluator service proposes an optimal grouping of the employees with one another for the future date and time. So, select groupings of optimal employee work combinations can be identified and used.

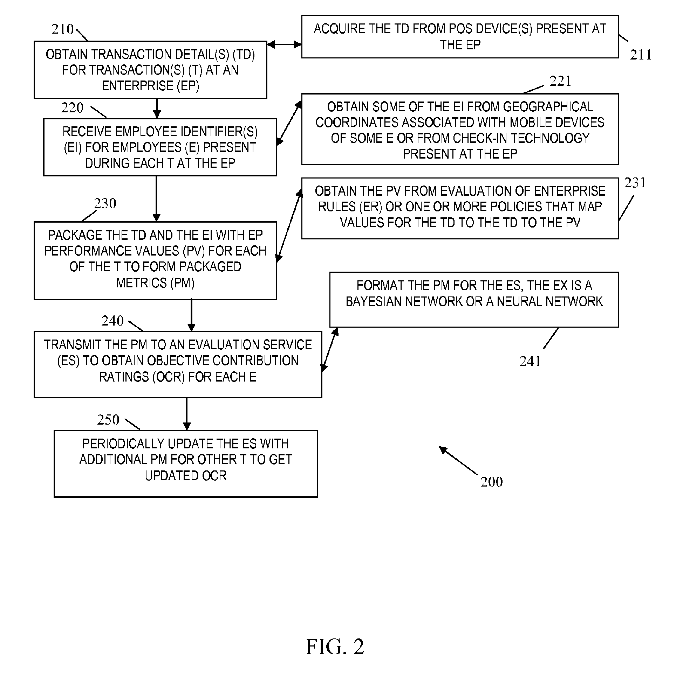

FIG. 2 is a diagram of another method 200 for objectively measuring a value for an employee, according to an example embodiment. The method 200 (hereinafter "correlation service") is implemented as instruction and programmed within memory and/or a non-transitory computer-readable (processor-readable) storage medium that executes on one or more processors of a device; the processors of the device are specifically configured to execute the correlation service. The correlation service is operational over a network; the network is wired, wireless, or a combination of wired and wireless.

Whereas the correlation service describes another and in some ways enhanced perspective of the employee evaluation service represented by the method 100 of the FIG. 1, discussed above.

At 210, the correlation service obtains one or more transaction details for one or more transactions occurring at an enterprise.

According to an embodiment, at 211, the correlation service acquires the transaction details from one or more POS (Point-Of-Sale) devices present at the enterprise.

At 220, the correlation service receives one or more employee identifiers for one or more employees present during each transaction at the enterprise. In some cases, the transaction is non-monetary, such as consumer survey results.

In an embodiment, at 221, the correlation service obtains some of the employee identifiers from geographical coordinates associated with mobile devices of some employees or from check-in technology present at the enterprise.

At 230, the correlation service packages the one or more transaction details and the one or more employee identifiers with one or more enterprise performance ratings for each of the transactions to form the one or more packaged metrics.

According to an embodiment, at 231, the correlation service obtains the one or more enterprise performance ratings from evaluation of one or more enterprise rules or one or more policies that map one or more values for the one or more transaction details to the one or more enterprise performance ratings.

At 240, the correlation service transmits the one or more packaged metrics to an evaluation service to obtain one or more objective contribution ratings for each employee. So, the variables permit the evaluation service to identify a contribution value for the employee.

In an embodiment, at 241, the correlation service formats the one or more packaged metrics for the evaluation service. The evaluation service is a Bayesian Network or a Neural Network.

According to an embodiment, at 250, the correlation service periodically updates the evaluation service with additional packaged metrics for other transactions to get updated contribution ratings.

Consider the following illustrations with respect to the correlation service.

Businesses generate hour-by-hour data indicating sales, profits and employees "on the clock." Social media and survey tools add to this information by providing a measure of consumer satisfaction with the business. In addition other variables like speed of service measurement can be extracted from the transaction times and telemetry devices operated by the business.

All of this information forms a data set for a credit assignment machine learning solution. Business metrics are used as labels with specific values for each deemed poor, medium, good, etc. according to the goals of the business. The data set is therefore labeled and can be used to train a machine learning algorithm such as a Bayesian Network (Neural Network) or a hidden Markov model that evolves a specific weight for each outcome metric as assigned to each team member. Any one team member will therefore have a "score" for his or her contribution to the overall team's ability to deliver each of the key metrics (speed of service, quality of services, profitability, total sales, etc. depending on the specific data that is being trained). These scores are referred to as Individual Per Business Metric Contribution Scores or IPBMC scores. The quality of IPBMC scores (i.e. their accuracy) is dependent on the consistency of the individual as well as the size of the data set that is being analyzed.

IPBMC scores will by definition provide a measure of any one individual's ability to influence business performance, allowing for stack-ranking and other traditional approaches to employee management but with new and better (more complete) information. This is a first advantage.

In addition, IPBMC scores for any group of employees can be used to predict the performance of the group at a future time. In other words, IPBMC score sets can be used to improve scheduling algorithms, resulting in more predictable business performance. This is accomplished, for example, using a generative model (essentially a machine learning algorithm running in reverse) that predicts performance of the team against the goal metrics. (Monte Carlo methods, boatsman machines and other methods known in the industry.) Boltzman machines and other well-known algorithms fill this purpose. Comparing multiple theoretical teams (permutations of the available employees) results in recommended best-fit groups of employees. External constraints such as reliability of the individual or overtime wages can be overlaid with the results of the generative team score to determine a final schedule choice.

Although, the examples presented have been focused on giving credit for an employee being present when positive outcomes occur, it is to be noted that the positive outcomes may continue for some extended period of time at a facility even after an employee has physically left a facility. This correlation can be tracked and noted as well. For example, this can be done by measuring key metrics for some period of time after the key employee's visit and associating the results of that time with the employee's own performance. It may even be that observation of metrics show that after a given employee's visit, performance is great for short period but then suffers in the long term. This could happen, for example, in an employee is aggressively discounting products. It might appear that business is up but once the discounts are gone, the business falls further than the gains.

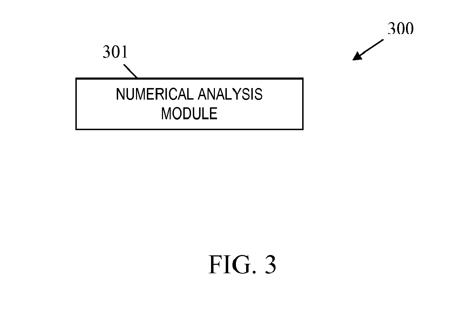

FIG. 3 is a diagram of an employee contribution system 300, according to an example embodiment. The components of the employee contribution system 300 are programmed and resided within memory and/or a non-transitory computer-readable medium and execute on one or more processors of one or more devices. The employee contribution system 300 is operational over a network and the network can be wired, wireless, or a combination of wired and wireless.

The employee contribution system 300 includes a numerical analysis module 301.

The employee contribution system 300 includes a server having a numerical analysis module 301 programmed within memory and/or a non-transitory computer-readable storage media as executable instructions. The server executes the numerical analysis module 301. Example aspects associated with the numerical analysis module 301 were presented above with reference to the FIGS. 1 and 2.

The numerical analysis module 301 is configured to be trained based on at least in part on gathering one or more enterprise metrics, one or more enterprise performance ratings for the one or more enterprise metrics, and one or more employee identifiers for one or more employees physically present during one or more transactions tied to one or more enterprise metrics. The numerical analysis module 301 is further configured to generate one or more contribution ratings for each employee.

According to an embodiment, the numerical analysis module 301 is a Bayesian Network.

In an embodiment, the server is a cloud server.

The above description is illustrative, and not restrictive. Many other embodiments will be apparent to those of skill in the art upon reviewing the above description. The scope of embodiments should therefore be determined with reference to the appended claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A processor-implemented method programmed in memory or a non-transitory processor-readable medium and to execute on one or more processors of a device configured to execute the method, comprising:
tracking, via the device, a date and time that an employee is physically present at an enterprise (step 110);
monitoring, via the device, one or more enterprise metrics for the date and time at the enterprise (step 120); and
correlating, via the device, one or more performance values for the one or more enterprise metrics with the employee physically present (step 130).

2. The method of claim 1 further comprising, obtaining, via the device, other performance values associated with other enterprise metrics and for other dates and times for the employee and for other employees (step 140).

3. The method of claim 2 further comprising, training, via the device, a Bayesian Network based at least in part on the one or more performance values, the one or more enterprise metrics, other performance values for the other enterprise metrics, the employee, and the other employees (step 141).

4. The method of claim 3 further comprising, generating, via the device, from the Bayesian Network one or more outcome weights for each employee with respect to other employees, the enterprise metrics, and the other enterprise metrics.

5. The method of claim 4 further comprising, generating, via the device, an overall contribution score for a particular employee based at least in part on summing the particular employee's one or more outcome weights (step 142).

6. The method of claim 4 further comprising, predicting, via the device, from the Bayesian Network outcomes for different proposed combinations of the employees based at least in part on a future time and date at the enterprise (step 144).

7. The method of claim 6 further comprising, proposing, via the device, an optimal grouping of the employees with one another for the future date and time (step 145).

8. The method of any preceding claim, wherein tracking further includes using a geographical position communicated from an application on a mobile device of the employee to track the date and time the employee is physically present at the enterprise (step 111).

9. The method of any preceding claim, wherein tracking further includes using an enterprise check-in technology to determine when the employee is physically present at the enterprise for the date and time (step 121).

10. The method of any preceding claim, wherein monitoring further includes acquiring a transactional metric for a transaction occurring at the enterprise on the date and time as the enterprise metric (step 122).

11. The method of any preceding claim, wherein correlating further includes assigning an objective contribution value to the employee based on a calculation of the one or more enterprise metrics for the date and time (step 131).

12. A system (300) comprising:
a server having a numerical analysis module (301);
wherein the numerical analysis module (301) is configured to be trained based at least in part on gathered one or more enterprise metrics, one or more enterprise performance ratings for the one or more enterprise metrics, and one or more employee identifiers for one or more employees physically present during one or more transactions tied to the one or more enterprise metrics, and wherein the numerical analysis module (301) is further configured to generate one or more contribution ratings for each employee.

13. The system of claim 12, wherein the numerical analysis module (301) is a Bayesian Network.

14. The system of claim 12 or 13, wherein the server is a cloud server.
